# FASCICULE DE BREVET EUROPEEN

(11) **EP 1 986 491 B1**
(45) Date de publication et mention de la délivrance du brevet: **01.04.2015**
(21) Numéro de dépôt: 07712231.5
(22) Date de dépôt: 16.02.2007
(51) Int. Cl.: A01K 73/10, B23D 15/04

(54) **SYSTEME DE SECURITE POUR BATEAU DE PECHE**
SICHERHEITSSYSTEM FÜR EIN FISCHERBOOT
SAFETY SYSTEM FOR A FISHING BOAT

(30) Priorité: 20.02.2006 FR 0650587
(43) Date de publication de la demande: 05.11.2008
(73) Titulaire: Commissariat à l'Énergie Atomique et aux Énergies Alternatives, 75015 Paris (FR)
(72) Inventeur: DELEIGNIES, Mathieu, 59290 Wasquehal (FR)
(74) Mandataire: Ilgart, Jean-Christophe
(86) Numéro de dépôt international: PCT/EP2007/051518
(87) Numéro de publication internationale: WO 2007/096307

(56) Documents cités:
- EP-A- 0 708 319
- EP-A1- 0 346 318
- FR-A- 2 100 402
- FR-A1- 2 456 585
- GB-A- 470 224
- GB-A- 2 266 694
- US-A- 5 376 933

## Description

### Domaine de l'invention

L'invention concerne le domaine de la sécurité des bateaux et navires de pêche, et en particulier la prévention des chavirages dû à l'accrochage des chaluts ou filets traînants.

### Art antérieur et problème posé

Les navires de pêche, tels que les chalutiers, peuvent se trouver en difficulté dans le cas où le chalut ou le filet s'accroche à un rocher, une épave ou un objet massif immergé. Le câble du chalut se tend alors complètement et le navire et déséquilibré par la traction exercée par le câble du chalut. Il s'ensuit un déséquilibre de l'assiette du navire et, de façon plus dramatique, un chavirage de ce dernier.

Actuellement, l'équipage du navire peut s'apercevoir d'une difficulté éventuelle relative au chalut en constatant les effets induits par l'augmentation anormale de la tension du câble de ce dernier. Un gîte important ou une modification substantielle de l'assiette du navire, des bruits mécaniques, une brutale modification de l'allure sont des critères relatifs à de telles difficultés. La détection du danger n'est donc pas immédiate. Il est alors nécessaire d'agir manuellement sur le treuil du chalut en le libérant ou sur le câble en le sectionnant avec les moyens existants à bord. Ceci ajoute un délai de réaction augmentant ainsi les risques d'accidents et leur niveau de gravité.

Dans la plupart des cas, pour sectionner un tel câble, l'équipage utilise une scie à disque ou un chalumeau. Ce type de manoeuvre présente de nombreux risques car il faut s'approcher du câble avec un outil dangereux, dans des conditions difficiles causées par l'état de la mer et l'assiette momentanée du bateau. La libération brutale du câble, suite au sectionnement, peut également blessée grièvement des opérateurs.

D'autre part, on connaît des sectionneurs plus ou moins sophistiqués, tels que celui décrit dans le brevet français 2 456 585, mais les conditions d'emploi d'un tel sectionneur restent difficiles car ce dernier a un poids de l'ordre de 28 kilogrammes pour des chalutiers de pêche de 12 à 25 m. De plus, il doit être installé lorsque le câble est déjà bloqué par un incident. Dans tous les cas, le temps dont dispose l'équipage pour intervenir est très court et les conditions d'intervention sont toujours très dangereuses et difficiles.

Le but de l'invention est donc de proposer un système ou dispositif de sécurité pour surveiller automatiquement l'apparition de conditions dangereuses, afin de déclencher une alerte en cas d'anomalie et d'envisager le largage du chalut dans un temps très court, sans que les membres de l'équipage soient obligés de s'approcher du câble du chalut. Il a également pour but d'anticiper une rupture mécanique du câble et de le sectionner à un endroit voulu, afin d'éviter qu'un homme d'équipage se trouvant à proximité ne soit blessé par une rupture brutale et inopinée du câble.

Un système selon le préambule de la revendication 1 est connu du document FR-A-2 100 402.

### Résumé de l'invention

A cet effet, l'objet principal de l'invention est un système de sécurité pour un bateau ou un navire comportant au moins un câble relié au bateau ou navire par une première extrémité et étant immergé par sa deuxième extrémité à laquelle est attaché un objet susceptible de traîner de façon immergée.

Selon l'invention, le système comprend :
- des moyens de détection de la position du bateau ;
- des moyens de détection de la tension du câble ;
- au moins un système d'alarme commandée par les moyens électroniques ; et
- un sectionneur de câble commandable à distance et possédant des moyens de positionnement du câble susceptible de défiler.

Ainsi, il est possible de sectionner un câble en fonction des conditions anormales d'assiette, c'est-à-dire de position, du bateau et de tension du câble, c'est-à-dire dans des conditions anormales de flottaison du bateau dues à une très grande résistance due à un objet, par exemple, un filet de pêche fixé à l'extrémité du câble.

Dans une réalisation électronique de l'invention, le système comprend des moyens électroniques pour le traitement des données et de commande recevant des signaux des moyens de détection de la position du bateau et des moyens de détection de la tension du câble.

Dans les premières réalisations principales de l'invention, le système se complète d'au moins une liaison électrique ou radio entre les moyens électroniques et le sectionneur pour commander automatiquement ce dernier quand certaines conditions de position du bateau et de tension du câble sont détectées.

Dans ce dernier cas, le sectionneur est avantageusement du type pyrotechnique à change creuse et comprend des moyens d'amorçage.

Dans une réalisation particulière de ce premier type de système selon l'invention, des moyens de tension du câble et positionnement du câble sont associées au sectionneur et sont constitués de deux poulies placées en dessous et de part et d'autre du sectionneur, dont :
- une poulie d'effort mobile en translation perpendiculaire à l'axe de défilement du câble et destinée à recevoir le câble appuyant dans la direction de translation de la poulie d'effort ; et
- une poulie de soutien placée à côté de la poulie d'effort, de l'autre côté du sectionneur.

Dans cette réalisation préférentielle, il est intéressant de compléter le sectionneur d'un explosif complémentaire placé en regard de la poulie de soutien et relié au moyen d'amorçage du sectionneur, dans le but de plaquer le câble contre la poulie de soutien.

Dans ce cas, il est prévu que les moyens de détection comprennent :
- un contacteur constitué d'un contacteur mobile et d'un contacteur fixe ; et
- des moyens élastiques de support placés entre un bâti fixe et un support de la roue d'effort et soutenant ainsi l'axe de cette roue d'effort.

De préférence, les moyens élastiques de support sont constitués d'un empilement de rondelles Belleville.

Dans cette réalisation, il est également prévu que la charge creuse soit constituée d'un matériau explosif constitué du même matériau explosif que celui constituant l'explosif complémentaire, placés tous les deux à l'intérieur d'une enveloppe de confinement de forme en demi-cylindre.

Une autre réalisation possible du système selon l'invention prévoit d'utiliser un interrupteur du type coup de poing relié audit sectionneur, de manière à permettre à un opérateur de commander manuellement ce dernier.

### Liste des figures

L'invention et ses différentes caractéristiques techniques seront mieux comprises à la lecture de la description suivante, accompagnée de plusieurs figures représentant respectivement :
- figure 1, en vue cavalière, un bateau de pêche sur lequel est installé le système de sécurité selon l'invention ;
- figure 2, un bloc diagramme illustrant une première réalisation de l'invention ;
- figure 3, un bloc diagramme illustrant une deuxième réalisation de l'invention ;
- figure 4, en vue de côté, un sectionneur utilisé dans le système selon l'invention ;
- figure 5, en coupe selon la ligne II-II de la figure 4, le même sectionneur de la figure 3 ; et
- figure 6, en coupe selon la ligne III-III de la figure 4, ce même sectionneur.

### Description détaillée d'une réalisation de l'invention

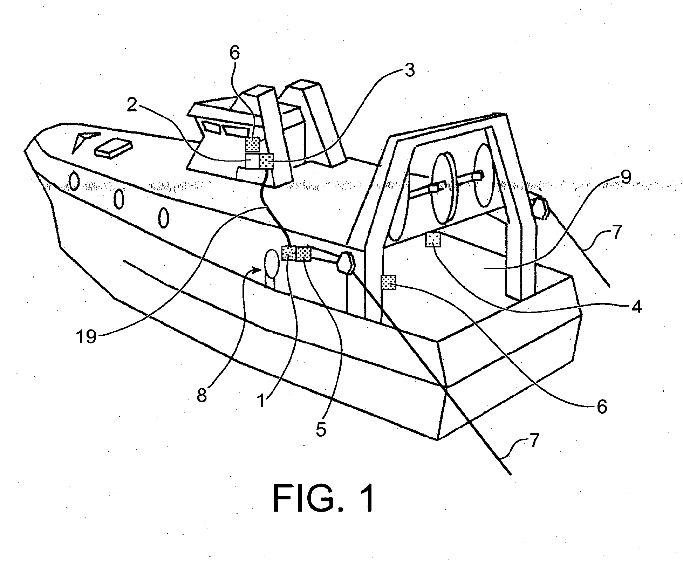

La figure 1 montre un bateau équipé d'un chalut traîné au moyen de deux câbles 7, manipulés chacun par un treuil 8, de façon habituelle. Ce chalutier est, selon l'invention, équipé d'un système de détection De tension 1 sur chacun des câbles 7. Un tel système de détection de tension 1 est placé juste avant le treuil à un endroit où le câble 7 de chalut est positionné toujours de la même manière, c'est-à-dire qu'il reste fixe mise à part son défilement. Un jeu de poulies peut permettre de positionner grossièrement le câble 7 dans une telle position. Un tel capteur de tension 1 peut être du type à seuil ou à mesure continu.

Le chalutier est également équipé d'un système de détection d'assiette 2, placé avec les appareils de navigation de bord, c'est-à-dire au niveau de la cabine de commande du chalutier. Un tel système de détection d'assiette permet de contrôler en permanence la position du bateau par rapport à l'horizontale.

Des moyens électroniques 3 embarqués sont également utilisés au niveau des instruments de commande du chalutier pour effectuer le traitement des données de commande et de contrôle du système selon l'invention. Ces moyens électroniques 3 reçoivent les signaux du système de détection de tension 1, relatifs aux câbles 7, et des signaux du système de détection d'assiette 2 du chalutier. Ces moyens traitent ces données pour signaler des conditions anormales de navigation et de fonctionnement du chalut et de ses câbles 7, en fonction de conditions de navigation déterminées relatives à l'assiette du chalutier et de tension de deux câbles 7 du chalut.

Un système d'alarme 4 sonore et/ou lumineux est installé sur le chalutier à un ou plusieurs endroits. Ici, il est installé à l'arrière du chalutier, sur le pont arrière 9 destiné à recevoir le chalut lorsque il est rempli, c'est-à-dire où est postée une partie de l'équipage de pêche. Ce système d'alarme est donc commandé par les moyens électroniques 3 pour être opérationnel en cas de conditions anormales de pêche ou de navigation du navire, notamment au niveau des câbles 7 du chalut.

Un sectionneur 5 est installé, au niveau du système de détection de tension 1, et est relié, soit aux moyens électroniques 3 par une liaison électrique 19 ou une liaison radio, soit à un ou plusieurs interrupteurs du type "coup de poing" 6 par une autre liaison électrique, par exemple un au niveau de la cabine de pilotage du chalutier et un sur le pont arrière 9. Ce ou ces interrupteurs du type coup de poing 6 sont reliés aux sectionneur 5, de façon à ce qu'un opérateur puisse actionner cet interrupteur en cas de conditions anormales de tension des câbles 7 du chalut, détectées par les moyens électroniques 3 et signalés par le système d'alarme 4. Ainsi, il est possible à n'importe quel opérateur sur le chalutier de procéder au sectionnement en urgence d'un des deux câbles 7 du chalut.

Tous ces différents ensembles nécessaires au système selon l'invention existent déjà et ne seront donc pas décrits en détail dans la présente demande, mis à part le sectionneur.

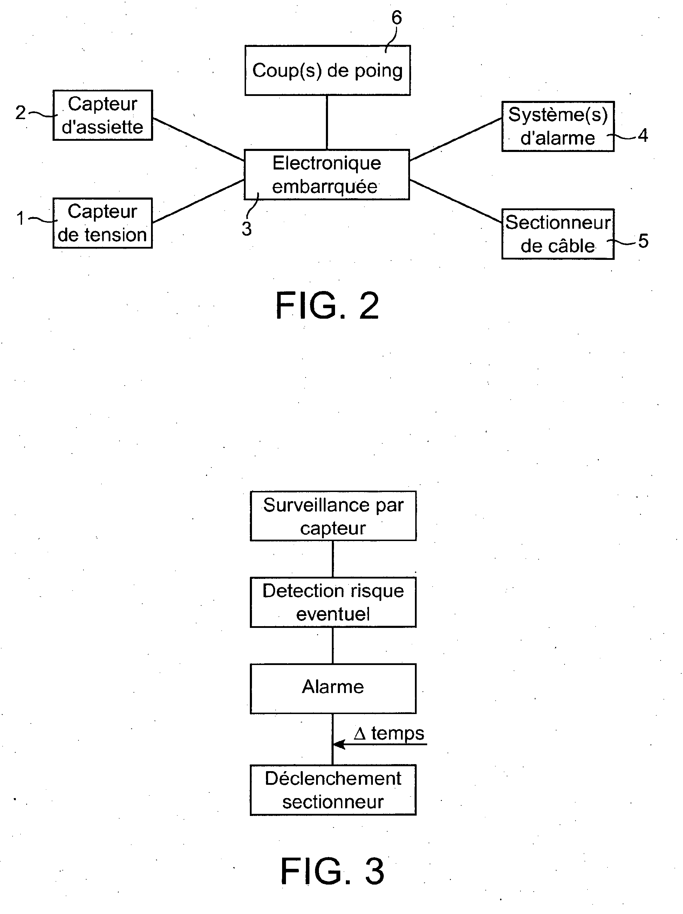

La figure 2 est un organigramme qui illustre une première version du système selon l'invention, utilisant un ou plusieurs interrupteurs du type coup de poing 6. On y retrouve les éléments énoncés précédemment, lors de la description de la figure 1. En effet, on constate la présence de tous ces éléments, à savoir le capteur de tension d'effort 1, le capteur d'assiette 2, l'interrupteur coup de poing 6, le système d'alarme 4 et le sectionneur de câble 5 qui sont tous reliés des moyens électroniques 3 embarqués. Ces .derniers reçoivent donc les signaux des capteurs 1 et 2 et également de l'interrupteur coup de poing 6. De plus, ils commandent le système d'alarme 4 et le sectionneur 5.

La figure 3 montre l'organigramme du déroulement des opérations dans les moyens électroniques du système selon l'invention.

La figure 3 montre l'ordonnancement des phases du système selon l'invention, notamment au niveau des moyens électroniques 3.

La première phase de surveillance par les capteurs a lieu pendant le déroulement normal de la pêche à bord du chalutier, lorsque les conditions de navigation et de tension des câbles 7 du chalut sont normales.

Lorsque ces conditions deviennent anormales et que les capteurs fournissent aux moyens électroniques des signaux montrant une tension excessive dans les câbles 7 et/ou une position anormale de l'assiette du chalutier, la deuxième phase de détection de risques éventuels est donc entamée.

Il s'ensuit une troisième phase dite d'alarme pendant laquelle les moyens électroniques actionnent le système d'alarme, afin de prévenir les opérateurs et membres de l'équipage du danger. Après un délai laissant à l'équipage le temps de s'éloigner du ou des câbles 7 et du chalut, les moyens électroniques déclenchent le sectionneur, avec pour effet le largage immédiat du chalut et la remise en sécurité du chalutier. Cette dernière phase est matérialisée par la dernière phase dite de déclenchement du sectionneur.

Des systèmes de détection de tension de câble sont par exemple décrits dans les documents de brevets européens EP 0 116 026, EP 0 346 318 et dans le brevet français publié sous le numéro FR 2 726 082. Des capteurs de gîte sont disponibles dans le commerce, ainsi que les systèmes d'alarmes sonores ou lumineux et les moyens électroniques de commande et de contrôle. Concernant le sectionneur, il en existe déjà également dans le commerce. Par contre, une réalisation particulière est proposée dans la présente demande. Toutefois, il est possible d'utiliser d'autres dispositifs ou que d'autres sectionneurs soient mis au point pour assurer cette fonction.

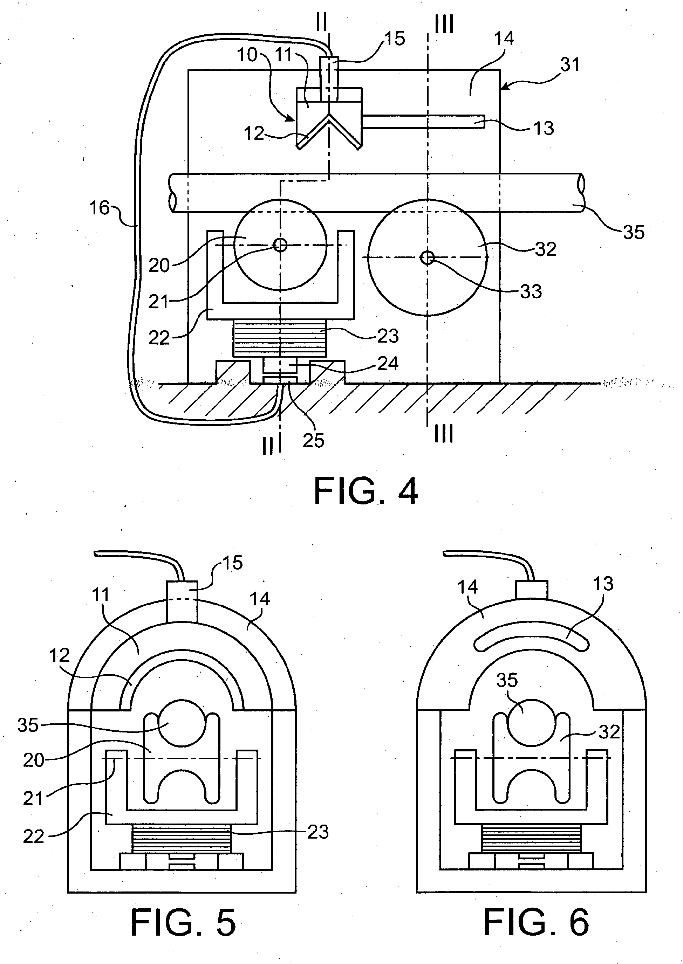

En référence à la figure 4, le sectionneur comprend un bâti fixe 31, sur lequel sont montés plusieurs éléments principaux, à savoir une charge creuse 10 et ses accessoires d'amorçage, et une poulie d'effort 20 montée mobile par rapport au bâti fixe 31 et une poulie de soutien 32, fixe par rapport au bâti fixe 31.

Les poulies de soutien 32 et d'effort 20 ont leurs axes respectifs 33 et 21 placés à peu près à la même hauteur par rapport au bâti fixe 31. L'axe 30 de la poulie de soutien 32 est fixe par rapport au bâti 31, tandis que l'axe 21 de la poulie d'effort 20 est mobile en translation verticale, telle que le sectionneur est représenté sur cette figure 4. En effet, il est monté fixe sur un soutien 22, lui-même monté mobile en translation verticale selon l'axe de la ligne II-II. Cette légère translation est obtenue au moyen d'un empilement de rondelles Belleville 23, posé ou fixe par rapport au bâti fixe 31, par une extrémité et, par conséquent, mobile par son autre extrémité sur laquelle est fixé le support 22. Un contacteur mobile 24 est fixe par rapport au support 22 et est placé en face d'un contacteur fixe 25, fixé sur le bâti fixe 31.

La charge creuse 10 est placée en dessous et entre les deux roues de soutien 32 et d'effort 20, toutefois relativement près de la roue d'effort 20. Elle est constituée d'un explosif de charge creuse 11 recouvert d'un revêtement 12 destiné à constituer le jet de sectionnement. Un détonateur 15 constitue une partie des moyens d'amorçage de cette charge creuse.

Celle-ci est complétée d'un explosif complémentaire 13 placé au-dessus de la roue de soutien 32. Cet explosif est destiné à exploser au même moment que la charge creuse 10 et à plaquer le câble 7 contre la ligne de soutien 32. Tous ces éléments explosifs sont placés à l'intérieur d'une enveloppe de confinement 14, de préférence en forme de demi-cylindre.

Le câble 7 est placé dans les gorges des roues de soutien 32 et d'effort 20 et se trouve également très près de la charge creuse 10 et de l'explosif complémentaire 13. Un conducteur 16 relie le contacteur fixe 25 au détonateur 15.

La figure 5 montre, en coupe, la forme en demi-cylindre de l'enveloppe de confinement 14, traversée par le détonateur 15 et entourant l'explosif de charge creuse 11, lui-même entourant le revêtement 12. La forme en vé de l'intérieur de la charge creuse 10, notamment du revêtement 12, apparente sur la figure 4 n'apparaît donc plus sur cette figure 5.

Le câble 7 est montré placé dans la gorge de la roue d'effort 20, libre en rotation autour de son axe 21, lui-même solidaire du support 22 monté sur des moyens élastiques de support constitués par un empilement 23 de rondelles Belleville qui est légèrement élastique.

On comprend ainsi que l'effet de détonation produit sur le revêtement 12 ayant un profil en vé, attaque le câble 7 sur la moitié de sa surface cylindrique.

La figure 6 montre une autre coupe, selon la ligne III-III de la figure 4, pour montrer la manière dont peut être placé l'explosif complémentaire 13. Celui-ci est placé à l'intérieur de l'enveloppe de confinement 14, mais sa forme en arc de cercle ne fait qu'un angle que de 20 ou 30°, car il n'est pas nécessaire que le câble 7 soit complètement entouré par cet explosif complémentaire 13. Il peut aussi être plaqué contre la poulie de soutien 32.

On comprend ainsi que lorsque le contacteur mobile 24 rentre en contact avec le contacteur fixe 25 sous l'effet d'un effort latéral intense du câble 7 sur la poulie d'effort 20, le détonateur 15 soit commandé pour amorcer l'explosif complémentaire 13 et la charge creuse 11 et provoquer le sectionnement du câble 7.

Ce système selon l'invention est donc automatique, puisqu'il permet de détecter l'effort mécanique exercé par le câble 7 en temps réel.

Le fait de plaquer le câble 7 contre la poulie de soutien 32, par le fait de l'explosion de l'explosif complémentaire 13, permet de stopper ce câble 7 dans son défilement longitudinal par rapport à la charge creuse 10 et de le fixer dans cette position, avant sa découpe par le déploiement du jet de revêtement de la charge creuse 10, à savoir quelques microsecondes plus tôt que ce jet du revêtement 12 de charge creuse.

Un tel sectionneur positionné à proximité d'un treuil constituant une installation d'utilisation du câble 7 est donc relié, par un conducteur 16, directement au moyen de détection de tension constitués ici par les contacteurs mobile 24 et fixe 25 et l'empilement de rondelles Belleville 23.

Toutefois, le déclenchement peut également être commandé de façon manuelle par action d'un ou de plusieurs boutons du type "coup de poing".

Les applications d'un tel sectionneur sont nombreuses, puisqu'il s'agit de toutes les liaisons par câble, cordage, tuyaux ou autres, nécessitant d'être interrompues instantanément, avec ou sans intervention humaine.

### Avantages de l'invention

Le système selon l'invention permet donc de prévenir le chavirage ou l'endommagement d'un bateau, tel qu'un chalutier, grâce à la rapidité du fonctionnement du système, notamment des moyens de détection ; par exemple, les moyens électroniques embarqués.

Il permet de prévenir des accidents dus à des ruptures inopinées de câble ou surtension de celui-ci.

Il permet donc également d'éviter des accidents liés aux sectionnements des câbles par des moyens nécessitant l'intervention directe de membres de l'équipage du chalutier.

Enfin, il permet de prévenir les accidents liés au relâchement du câble, lors de sectionnements automatiques de ces derniers, grâce aux systèmes d'alarmes. En effet, celui-ci permet de laisser un temps prédéfini au moment de l'équipage pour s'éloigner de l'endroit.

### Aménagement du système

Il est possible de doter le système de capteurs supplémentaires, en vue d'améliorer la rapidité et la fiabilité des alertes.

Il est également possible d'utiliser la vitesse du bateau pour vérifier l'apparition d'une anomalie dans le système de chalut.

L'utilisation de données préenregistrées et de données sur l'état de la mer et les variations des paramètres mesurés par les capteurs dans les instants précédents pour affiner les critères de détection d'anomalie est possible.

Il est également possible d'utiliser la durée de l'alarme pour affiner les critères d'anomalie et en vérifier la persistance.

## Revendications

1. Système de sécurité pour bateau ou navire comportant au moins un câble (7) relié au bateau par une première extrémité et immergé par sa deuxième extrémité à laquelle est attaché un objet susceptible de traîner sous l'eau, comprenant :
- des moyens de détection d'assiette (5) du bateau ;
- des moyens de détection de tension (1) du câble (7) ;
- au moins un système d'alarme (4) commandé par les moyens électroniques (3) ; et **caractérisé en ce qu'**il comprend :
- un sectionneur (5) de câble (7) commandable à distance et possédant des moyens de positionnement du câble (7) susceptible de défiler.

2. Système selon la revendication 1, **caractérisé en ce qu'**il comprend des moyens électroniques (3) pour le traitement des données et recevant les signaux de par des moyens de détection d'assiette (2) et des moyens de détection de tension (1).

3. Système selon la revendication 1, **caractérisé en ce qu'**il comprend au moins une liaison électrique (19) entre les moyens électroniques (3) et le sectionneur (5) pour le commander dans certaines conditions d'assiette du bateau et de tension du câble (7) sont détectées.

4. Système selon la revendication 1, **caractérisé en ce qu'**il comprend au moins une liaison radio entre les moyens électroniques (3) et le sectionneur (5) pour le commander dans certaines conditions d'assiette du bateau et de tension du câble (7) sont détectées.

5. Système selon la revendication 1, **caractérisé en ce que** le sectionneur (5) et de type pyrotechnique à charge creuse et comprend des moyens d'amorçage (15, 16).

6. Système selon la revendication 1, **caractérisé en ce que** les moyens de détection de tension du câble (7) et d'assiette du bateau sont associés au sectionneur (5), et sont constitués de deux poulies placées en dessous et de part et d'autre d'une charge creuse (10) constituant le sectionneur et à savoir :
- une poulie d'effort (20) mobile en translation par son axe (21) et destinée à recevoir le câble (7) appuyant sur cette poulie d'effort (20) dans la direction de translation de cette poulie d'effort (20) ; et
- une poulie de soutien (32) placée à côté de la poulie d'effort (20) et de l'autre côté de la charge creuse (10).

7. Système selon la revendication 6, **caractérisé en ce qu'**un explosif complémentaire (13) est utilisé et placé en regard de la poulie de soutien (32) et relié au moyen d'amorçage (15, 16) de la charge creuse (10).

8. Système selon la revendication 7, **caractérisé en ce que** la charge creuse (10) comprend un matériau explosif (11) constitué du même matériau explosif que celui constituant l'explosif complémentaire (13), placés tous les deux à l'intérieur d'une enveloppe de confinement (14) de façon en demi-cylindre.

9. Système selon la revendication 1, **caractérisé en ce que** les moyens de détection de tension comprennent :
- un contacteur constitué d'un contacteur mobile (24) et d'un contacteur fixe (25) ; et
- des moyens élastiques de support placés entre le bâti fixe (31) et le support (22) de la roue d'effort (20) et soutenant ainsi l'axe (21) de cette roue d'effort (20).

10. Système selon la revendication 9, **caractérisé en ce que** les moyens élastiques de support sont constitués d'un empilement de rondelles Belleville (23).

11. Système selon la revendication 1, **caractérisé en ce qu'**il comprend un interrupteur du type coup de poing (6) relié aux sectionneurs (5).

## Patentansprüche

1. Sicherheitssystem für ein Boot oder Schiff, welches zumindest ein dickes Seil oder Tau (7) aufweist, welches an einem ersten Ende mit dem Boot verbunden ist und dessen zweites Ende, an welchem ein Gegenstand befestigt ist, welcher zum Nachziehen bzw. Nachschleppen unter Wasser geeignet ist, versenkt ist, wobei das Sicherheitssystem Folgendes umfasst:
- Mittel zur Erfassung der Lage (5) des Boots;
- Mittel zur Erfassung der Zugspannung (1) des Taus (7);
- mindestens ein Alarmsystem (4), welches von elektronischen Mitteln (3) gesteuert bzw. befehligt wird; und wobei das System **dadurch gekennzeichnet** ist, dass es Folgendes aufweist:
- einen Tau- bzw. Seil (7)-Trennschalter (5), welcher fernsteuerbar ist und welcher Mittel zur Positionierung des für das Nachziehen bzw. Nachschleppen geeigneten Taus (7) besitzt.

2. System nach Anspruch 1, **dadurch gekennzeichnet, dass** es elektronische Mittel (3) zur Verarbeitung der Daten aufweist und dass es die Signale von den Mitteln zur Lageerfassung (2) und von den Mitteln zur Zugspannungserfassung (1) empfängt.

3. System nach Anspruch 1, **dadurch gekennzeichnet, dass** es mindestens eine elektrische Verbindung (19) zwischen den elektronischen Mitteln (3) und dem Trennschalter (5) umfasst, um das System zu steuern bzw. zu befehligen, wenn gewisse Lagezustände des Bootes und Seil- bzw. Tauzugspannungszustände erfasst werden.

4. System nach Anspruch 1, **dadurch gekennzeichnet, dass** es mindestens eine Funkverbindung zwischen den elektronischen Mitteln (3) und dem Trennschalter (5) umfasst, um das System zu steuern bzw. zu befehligen, wenn gewisse Lagezustände des Bootes und Seil- bzw. Tauzugspannungszustände erfasst werden.

5. System nach Anspruch 1, **dadurch gekennzeichnet, dass** der Trennschalter (5) von pyrotechnischer Art mit Hohlladung ist und Mittel zur Zündung (15, 16) aufweist.

6. System nach Anspruch 1, **dadurch gekennzeichnet, dass** die Mittel zur Erfassung der Zugspannung des Seils bzw. Taus (7) und der Lage des Bootes mit dem Trennschalter (5) verbunden sind, und aus zwei Seilscheiben gebildet sind, welche unter und auf beiden Seiten einer den Trennschalter bildenden Hohlladung (10) angeordnet sind, und zwar:
- eine Antriebsscheibe (20), welche eine Translationsbewegung um ihre Achse (21) ausführen kann und dazu bestimmt ist, das auf der Antriebsscheibe (20) ruhende Seil bzw. Tau (7) in Translationsrichtung der Antriebsscheibe (20) aufzunehmen; und
- eine Stützscheibe (32), welche neben der Antriebsscheibe (20) und auf der anderen Seite der Hohlladung (10) angeordnet ist.

7. System nach Anspruch 6, **dadurch gekennzeichnet, dass** ein zusätzlicher Sprengkörper (13) verwendet und gegenüber der Stützscheibe (32) angeordnet ist, und mit den Mitteln zur Zündung (15, 16) der Hohlladung (10) verbunden ist.

8. System nach Anspruch 7, **dadurch gekennzeichnet, dass** die Hohlladung (10) einen explosiven Werkstoff (11) aufweist, welcher aus demselben explosiven Werkstoff wie der hergestellt ist, der den zusätzlichen Sprengkörper (13) bildet, wobei alle beide im Inneren einer Sicherheitsumhüllung (14) von der Art eines Halbzylinders platziert werden.

9. System nach Anspruch 1, **dadurch gekennzeichnet, dass** die Mittel zur Erfassung der Zugspannung Folgendes umfassen:
- einen Kontaktgeber, welcher sich aus einem beweglichen Kontaktgeber (24) und einem stationären bzw. festen Kontaktgeber (25) zusammensetzt; und
- elastische Stützmittel, welche zwischen dem festen Tragrahmen (31) und dem Träger (22) des Antriebsrads (20) platziert sind und auf diese Weise die Achse (21) des Antriebsrads (20) stützen.

10. System nach Anspruch 9, **dadurch gekennzeichnet, dass** die elastischen Stützmittel durch eine Stapelung von Tellerfedern (23) gebildet sind.

11. System nach Anspruch 1, **dadurch gekennzeichnet, dass** es einen Schalter von der Art eines NOT-AUS-Schalters (6) aufweist, welcher mit den Trennschaltern (5) verbunden ist.

## Claims

1. Safety system for a boat or ship comprising at least one cable (7) connected to the boat by a first end and immersed via its second end, to which is attached an object capable of being dragged under the water, comprising:
- means for detecting the trim (5) of the boat;
- tension detecting means (1) for the cable (7);
- at least one alarm system (4) controlled by electronic means (3); and **characterised in that** it comprises:
- a remotely controllable cutter (5) for cutting a cable (7) and having means for positioning the cable (7) capable of running.

2. System according to claim 1, **characterised in that** it comprises electronic means (3) for processing data and receiving the signals by means of trim detecting means (2) and tension detecting means (1).

3. System according to claim 1, **characterised in that** it comprises at least one electrical link (19) between the electronic means (3) and the cutter (5) to control the latter in the event that certain boat trim and cable (7) tension conditions are detected.

4. System according to claim 1, **characterised in that** it comprises at least one radio link between the electronic means (3) and the cutter (5) to control the latter in the event that certain boat trim and cable (7) tension conditions are detected.

5. System according to claim 1, **characterised in that** the cutter (5) is a pyrotechnic cutter using a shaped charge and includes initiation means (15, 16).

6. System according to claim 1, **characterised in that** the cable (7) tension and boat trim detecting means are associated with the cutter (5) and are formed from two pulleys positioned below and on either side of a shaped charge (10) forming the cutter, i.e.:
- a load pulley (20) capable of moving in translation via its axis (21) and intended to receive the cable (7) resting on this load pulley (20) in the direction of translation of this load pulley (20); and
- a support pulley (32) positioned next to the load pulley (20) and on the other side of the shaped charge (10).

7. System according to claim 6, **characterised in that** an additional explosive (13) is used and positioned opposite the support pulley (32) and connected to the initiation means (15, 16) for the shaped charge (10).

8. System according to claim 7, **characterised in that** the shaped charge (10) comprises an explosive material (11) formed from the same explosive material as that forming the additional explosive (13), both arranged in a semi-cylindrical confinement housing (14).

9. System according to claim 1, **characterised in that** the tension detecting means include:
- a contactor formed from a movable contactor (24) and a fixed contactor (25); and
- elastic support means positioned between the fixed frame (31) and the support (22) for the load wheel (20) and thus supporting the axis (21) of this load wheel (20).

10. System according to claim 9, **characterised in that** the elastic support means are formed from a stack of Belleville washers (23).

11. System according to claim 1, **characterised in that** it comprises a mushroom push button switch (6) connected to the cutters (5).
